# EUROPEAN PATENT APPLICATION

(11) **EP 4 340 072 A1**
(43) Date of publication of application: **20.03.2024**
(21) Application number: 22806544.7
(22) Date of filing: 29.04.2022
(51) Int. Cl.: H01M 4/62, H01M 4/505

(54) **DOPED TERNARY PRECURSOR, POSITIVE ELECTRODE MATERIAL, AND PREPARATION METHOD**

(30) Priority: 12.05.2021 CN 202110514689
(71) Applicant: SVOLT ENERGY TECHNOLOGY CO., LTD, Changzhou, Jiangsu 213200 (CN)
(72) Inventor: WAN, Jiangtao, hangzhou, Jiangsu 213200 (CN); ZHANG, Ning, hangzhou, Jiangsu 213200 (CN); ZHANG, Yongjie, hangzhou, Jiangsu 213200 (CN); LIU, Manku, hangzhou, Jiangsu 213200 (CN); LI, Zitan, hangzhou, Jiangsu 213200 (CN)
(74) Representative: Albert Catala, Andrea
(86) International application number: PCT/CN2022/090151
(87) International publication number: WO 2022/237576

(57) **Abstract**

The present disclosure provides a doped ternary precursor, a preparation method therefor, a positive electrode material, and a battery. The method comprises: mixing a fluoride salt and an alkali solution to adjust the pH, and adding a nickel cobalt manganese material, and after the reaction, preparing and obtaining a doped ternary precursor. In the present disclosure, a co-precipitation method is not required when doping metal elements and fluorine for introducing metal elements and fluorine ions, and the purity of a mother liquor system is ensured, thus preventing the corrosion of devices and pipes by co-precipitation processes; in addition, the process is simple, raw materials are easy to obtain, and the present invention is easy to industrialize.

## Description

### Technical Field

The disclosure relates to the technical field of batteries and a cathode material, in particular to a doped ternary precursor, a cathode material and a preparation method.

### Background Art

In the field of lithium batteries, high-nickel ternary cathode materials have high specific discharge capacity, but there are some safety problems. At present, doping is one of the technical means to solve the safety problems. However, doping elements prepared by the conventional coprecipitation method have certain defects. First, it is difficult to coprecipitate calcium in the hydroxide precursor, calcium is often coprecipitated into the final material in the form of calcium sulfate, calcium sulfate is incompletely precipitated and easily remains in the mother liquor, and the sulfate radical is introduced in the final material, so that the sulfur content of the final material is high, which has a great influence on the high-nickel small particle cathode material sintered at low temperature; the precipitate pH is required to be increased to more than 12.5 for the coprecipitation doping of magnesium to basically ensure that there is no residual magnesium ion in the mother liquor, which does not meet the most pH conditions of coprecipitation; in addition, the coprecipitation defect of fluorine is larger, the introduction of soluble fluoride ions for coprecipitation has high requirements for pipes and equipment, serious corrosion is caused to the equipment, and it is difficult to treat the wastewater.

The existing ternary precursors and cathode materials are mostly doped by coprecipitation, but it is difficult to dope and coprecipitate positive ions (such as calcium and magnesium) and fluorine. Therefore, how to avoid the high requirements of positive ion and fluorine coprecipitation and doping for the equipment while ensuring that the ternary precursor has doping elements has become an urgent problem to be solved.

### Content of Invention

The disclosure provides a preparation method for a doped ternary precursor in an embodiment, including:
Mix fluoride salt with lye to adjust pH, and add nickel-cobalt-manganese material to prepare the doped ternary precursor after reaction.

In the method provided by an embodiment of the disclosure, the fluoride salt is introduced as a seed crystal in the precursor stage and reacts with the nickel-cobalt-manganese material to obtain the ternary precursor doped with metal elements and fluorine, raw materials are simple and easily obtained; taking the metal cations calcium and/or magnesium of fluoride salt as an example, (1) By adopting the method, calcium ions, magnesium ions and fluorine ions are not required to be introduced by coprecipitation in the doping process of calcium, magnesium and fluorine; sulfate is mostly used in the coprecipitation method, and the sulfate radical easily remains in the mother liquor and is finally introduced into the final material, so that the sulfur content of the final material is high, which has a great influence on the high-nickel small particle cathode material sintered at low temperature, ensures the purity of the mother liquor system, and avoids the corrosion of equipment and pipelines in the coprecipitation process; (2) Compared with the conventional mixed doping in the sintering stage, nano-powder raw materials containing doping elements is not required to be introduced for the cathode material prepared by the doped ternary precursor, simplifying the mixing process, and having the characteristics of simple preparation process, small equipment corrosion, easy availability of raw materials and easy industrialization.

In an embodiment, the fluoride salt comprises calcium fluoride and/or magnesium fluoride, and the nickel-cobalt-manganese material comprises a nickel source, a cobalt source and a manganese source.

In the method provided by an embodiment of the invention, , the layered structure of the material can be stabilized, the cycling and safety performance can be improved by using calcium fluoride and/or magnesium fluoride and doping calcium, magnesium and fluorine simultaneously.

It should be noted that the nickel sources, cobalt sources, and manganese sources include but are not limited to the following types, for example, the nickel sources include nickel sulfate, the cobalt sources include cobalt sulfate, and the manganese sources include manganese sulfate.

In an embodiment, the fluoride salt is obtained by treating waste residues containing the fluoride salt, and the treatment method includes: pickle and filter the waste residues containing the fluoride salt to obtain filter residues, and wet grind the filter residues after washing.

In the disclosure, the specific types and sources of materials containing fluoride salt are not specified, which can be waste residues containing calcium fluoride and/or magnesium fluoride, and the process is green, environmentally friendly and low-cost by recycling the waste residues.

In an embodiment of the disclosure, calcium fluoride and magnesium fluoride residues are used for doping, which are relatively large hazardous waste by-products in actual production, and can be utilized and made into new products to achieve low-cost green production and good economy.

Exemplarily, a method for treating waste residues containing fluoride salt is provided, including the following steps:
Pickle and filter the waste residues containing fluoride salt to obtain filter residues; the pickling process is performed for 0.5 to 3 hours (for example, 0.5 hour, 1 hour, 1.5 hours, 2 hours, 2.5 hours or 3 hours) at the stirring speed of 100 to 300 rpm (for example, 100 rpm, 150 rpm, 170 rpm, 180 rpm, 200 rpm, 240 rpm, 260 rpm or 300 rpm) and the heating temperature of 30 to 55 degrees C (for example, 30, 32, 33, 35, 40, 45 or 50 degrees C), the mass of the acid solute is 0.1 to 1% (for example, 0.1%, 0.2%, 0.3%, 0.5%, 0.7%, 0.8% or 1%) of the mass of the waste residue, the volume ratio of the waste residues to the solvent is 1:(0.5-4) (for example, 1:0.5, 1:1, 1:1.5, 1:2, 1:2.5, 1:3 or 1:4), wash and wet-mill the filter residues for 30-120 minutes (for example, 30 minutes, 40 minutes, 45 minutes, 50 minutes, 60 minutes, 70 minutes, 80 minutes, 90 minutes, 100 minutes, 110 minutes or 120 minutes), and the average particle size is 0.3-1.5 µm (for example, 0.3 µm, 0.5 µm, 0.8 µm, 1 µm, 1.2 µm, 1.3 µm or 1.5 µm) after ball milling. The acidic solute includes one or at least two of hydrochloric acid, nitric acid, sulfuric acid or oxalic acid, and the solvent includes water.

In an embodiment, the pH is 10 to 12, for example, 10.0, 10.2, 10.4, 10.6, 10.8, 11.0, 11.2, 11.4, 11.6, 11.8 or 12.0. In the conventional precipitation doping process, taking doped magnesium as an example, the pH of coprecipitation is required to be above 12.5 to ensure no residual magnesium ion in the mother liquor; taking doped fluorine as an example, soluble fluoride ions are required to be introduced, the anti-corrosion requirements for the equipment are high, and the generated waste water is difficultly treated. The method provided by an embodiment of the disclosure can effectively avoid the problems of high pH, high equipment requirements and wastewater treatment.

In an embodiment, sodium hydroxide solution and ammonia solution are also added in the reaction.

The molar weight of sodium hydroxide in the sodium hydroxide solution is the same as the total molar weight of nickel, cobalt and manganese in the nickel-cobalt-manganese material.

The molar weight of ammonia in the ammonia solution is the same as the total weight of nickel, cobalt and manganese in the nickel-cobalt-manganese material.

In an embodiment, the molar weight of metal elements in the fluoride salt is 0.1∼1% of the total molar weight of nickel, cobalt and manganese in the nickel-cobalt manganese material, for example, 0.1%, 0.2%, 0.3%, 0.4%, 0.5%, 0.6%, 0.7%, 0.8%, 0.9% or 1.0%. In an embodiment of the disclosure, by controlling the molar weight of metal elements in the fluoride salt to 0.1-1% of the total molar weight of nickel, cobalt and manganese in the nickel-cobalt-manganese material, the invention has the advantages of high capacity and good cycling. If the addition amount is less than 0.1%, the cycling performance will become poor; if the addition amount is higher than 1%, the capacity will be reduced.

Alternatively, the total molar concentration of nickel, cobalt and manganese in the nickel-cobalt-manganese material of the invention is 0.5 to 2 mol/L (for example, 0.5 mol/L, 1 mol/L, 1.5 mol/L, 1.7 mol/L, 1.8 mol/L or 2 mol/L); the concentration of the sodium hydroxide solution is 5 to 10 mol/L (for example, 5 mol/L, 6 mol/L, 7 mol/L, 8 mol/L or 10 mol/L); the concentration of the ammonia solution is 8 to 12 mol/L (for example, 8 mol/L, 9 mol/L, 10 mol/L, 11 mol/L or 12 mol/L).

In an embodiment, the reaction temperature is 50 to 60 degrees C, for example, 50, 51, 52, 53, 54, 55, 56, 57, 58, 59 or 60 degrees C.

The reaction time is 30 to100 hours, for example, 30, 35, 40, 45, 50, 55, 60, 65, 70, 75, 80, 85, 90, 95 or 100 hours.

It should be noted that the products obtained after the reaction are filtered, washed and dried in turn.

The disclosure provides a doped ternary precursor, which is prepared by the preparation method for the doped ternary precursor, doping elements of the doped ternary precursor comprise fluorine ions and metal cations, the metal cations are the same as the metal cations in the fluoride salt, and the average particle size of the doped ternary precursor is 3 to 11 µm, for example, 3.0, 3.5, 4.0, 4.5, 5.0, 5.5, 6. , 6.5, 7.0, 7.5, 8.0, 8.5, 9.0, 9.5, 10.0, 10.5 or 11.0 µm.

The disclosure provides a cathode material, which is prepared by the doped ternary precursor, and comprises a ternary positive active substance and an aluminum oxide layer coated on the surface of the ternary positive active substance.

In one embodiment, the lithium source is used in appropriate excess.

In one embodiment, the molar ratio of the lithium source to the doped ternary precursor is 1.01 to 1.08, and the lithium source may, for example, be lithium hydroxide.

Exemplarily, a preparation method for the cathode material is provided, including the following steps:
Mix the dried doped ternary precursor with a theoretical amount of 1.01-1.08X (for example, 1.01X, 1.02X, 1.03X, 1.04X, 1.05X, 1.06X or 1.08X) lithium source for 8-12 minutes (for example, 8 minutes, 9 minutes, 10 minutes or 12 minutes), calcinate and coat aluminum oxide in turn; for the polycrystalline cathode material, the calcination temperature is 680-750 degrees C (for example, 680, 700, 710, 720, 730, 740 or 750 degrees C), the calcination time is 10-15 hours (for example, 10 hours, 11 hours, 12 hours, 13 hours, 14 hours or 15 hours), the coating temperature is 500-600 degrees C (for example, 500, 520, 540, 580 or 600 degrees C), the coating time is 6-10 hours (for example, 6 hours, 7 hours, 8 hours, 9 hours or 10 hours), and the coating amount of aluminum oxide is 0.1-0.3% (for example, 0.1%, 0.2% or 0.3%); for the single crystal cathode material, the calcination temperature is 850-980 degrees C (for example, 850, 870, 880, 900, 925 or 950 degrees C), the calcination time is 8-20 hours (for example, 8 hours, 9 hours, 10 hours, 12 hours, 14 hours, 15 hours, 17 hours, 18 hours or 20 hours), the coating temperature is 500-600 degrees C (for example, 500, 520, 550, 580 or 600 degrees C), the coating time is 6-10 hours (for example, 6 hours, 8 hours, 8 hours or 10 hours), and the coating amount of aluminum oxide is 0.1-0.25% (for example, 0.1%, 0.15% or 0.2%).

It should be noted that the coating amount of aluminum oxide is equal to the mass of aluminum oxide divided by the total mass of the cathode material.

Exemplarily, a preparation method for preparing the cathode material using the doped ternary precursor is provided, including the following steps:
(I) Pickle and filter the waste residues containing fluoride salt to obtain filter residues; the pickling process is performed for 0.5 to 3 hours (for example, 0.5 hour, 1 hour, 1.5 hours, 2 hours, 2.5 hours or 3 hours) at the stirring speed of 100 to 300 rpm (for example, 100 rpm, 150 rpm, 200 rpm, 260 rpm or 300 rpm) and the heating temperature of 30 to 55 degrees C (for example, 30, 35, 40, 45, 50 or 55 degrees C), the mass of the acid solute is 0.1 to 1% (for example, 0.1%, 0.2%, 0.3%, 0.4%, 0.5%, 0.6%, 0.7%, 0.8%, 0.9% or 1%) of the mass of the waste residue, the volume ratio of the waste residues to the solvent is 1:(0.5-4) (for example, 1:0.5, 1:1, 1:1.5, 1:2, 1:2.5, 1:3 or 1:4), wash and wet-mill the filter residues for 30-120 minutes (for example, 30 minutes, 40 minutes, 45 minutes, 50 minutes, 60 minutes, 70 minutes, 80 minutes, 90 minutes, 100 minutes, 110 minutes or 120 minutes), and the average particle size is 0.3-1.5 µm (for example, 0.3 µm, 0.5 µm, 0.8 µm, 1 µm, 1.2 µm, 1.3 µm or 1.5 µm) after ball milling;
(II) Mix the ball-milled fluoride salt with lye, adjust the pH to 10-12 (for example, 10, 10.5, 11, 11.5 or 12), raise the temperature to 50-60 degrees C (for example, 50, 52, 55 or 60 degrees C), and add nickel-cobalt-manganese material solution, 5-10 mol/L (for example, 5 mol/L, 6 mol/L, 7 mol/L, 8 mol/L, 9 mol/L or 10 mol/L) sodium hydroxide solution and 8-12 mol/L (for example, 8 mol/L, 9 mol/L, 10 mol/L, 11 mol/L or 12 mol/L) ammonia solution; the molar weight of sodium hydroxide in the sodium hydroxide solution and the molar weight of ammonia water in the ammonia solution are the same as the total molar weight of nickel, cobalt and manganese in the nickel-cobalt manganese material, the molar weight of metal elements in the fluoride salt is 0.1-1% (for example, 0.1%, 0.2%, 0.3%, 0.4%, 0.5%, 0.6%, 0.7%, 0.8%, 0.9% or 1%) of the total molar weight of nickel, cobalt and manganese in the nickel-cobalt manganese material, and the total molar concentration of nickel, cobalt and manganese in the nickel-cobalt-manganese material is 0.5-2 mol/L (for example, 0.5 mol/L, 1 mol/L, 1.5 mol/L or 2 mol/L); after reaction for 30-100 hours (for example, 30 hours, 35 hours, 40 hours, 45 hours, 50 hours, 55 hours, 60 hours, 65 hours, 70 hours, 75 hours, 80 hours, 85 hours, 90 hours or 100 hours), filter, wash and dry in turn to obtain the doped ternary precursor with an average particle size of 3-11 µm (for example, 3 µm, 4 µm, 5 µm, 6 µm, 7 µm, 8 µm, 9 µm or 10 µm);
(III) Mix the dried doped ternary precursor with the lithium source for 8-12 minutes (for example, 8 minutes, 9 minutes, 10 minutes, 11 minutes or 12 minutes), the molar ratio of the lithium source to the doped ternary precursor is 1.01-1.08 (for example, 1.01, 1.02, 1.03, 1.04, 1.05, 1.06 or 1.08), and calcinate and coat aluminum oxide in turn; for the polycrystalline cathode material, the calcination temperature is 680-750 degrees C (for example, 680, 700, 710, 720, 730, 740 or 750 degrees C), the calcination time is 10-15 hours (for example, 10 hours, 11 hours, 12 hours, 13 hours, 14 hours or 15 hours), the coating temperature is 500-600 degrees C (for example, 500, 520, 540, 580 or 600 degrees C), the coating time is 6-10 hours (for example, 6 hours, 7 hours, 8 hours, 9 hours or 10 hours), and the coating amount of aluminum oxide is 0.1-0.3% (for example, 0.1%, 0.2% or 0.3%); for the single crystal cathode material, the calcination temperature is 850-980 degrees C (for example, 850, 870, 880, 900, 925 or 950 degrees C), the calcination time is 8-20 hours (for example, 8 hours, 9 hours, 10 hours, 12 hours, 14 hours, 15hours, 17 hours, 18 hours or 20 hours), the coating temperature is 500-600 degrees C (for example, 500, 520, 550, 580 or 600 degrees C), the coating time is 6-10 hours (for example, 6 hours, 8 hours, 9 hours or 10 hours), and the coating amount of aluminum oxide is 0.1-0.5% (for example, 0.1%, 0.2%, 0.3%, 0.4% or 0.5%).

The disclosure provides a battery in an embodiment, which comprises a positive electrode, a negative electrode and a diaphragm, and the positive electrode is made of the cathode material.

The value range of the disclosure not only includes point values enumerated above, but also includes any point values within the value range. Due to space limitation and for the sake of simplicity, the disclosure does not enumerate the specific point values included within the range.

### Description of Drawings

### Embodiments

The technical proposal of the disclosure is further described below in combination with the embodiments. The technician in the field should understand that the embodiments are intended only to assist in understanding the disclosure and should not be regarded as specific limitations to the disclosure.

In the following embodiments, lithium hydroxide is used as the lithium source, and nickel-cobalt-manganese material includes nickel sulfate, cobalt sulfate and manganese sulfate, wherein 811 nickel-cobalt-manganese material represents the molar ratio of nickel, cobalt and manganese in the nickel-cobalt-manganese material is 8:1:1, and 831106 nickel-cobalt-manganese material represents the molar ratio of nickel, cobalt and manganese in the nickel-cobalt-manganese material is83:11:6.

### Embodiment 1

The embodiment provides a preparation method for preparing a cathode material using a doped ternary precursor, including the following steps:
(I) Pickle and filter the waste residues containing calcium fluoride and magnesium fluoride to obtain filter residues; the pickling process is performed for 1 hour at the stirring speed of 200 rpm and the heating temperature of 40 degrees C, use oxalic acid solution for pickling, the mass of oxalic acid is 1% of the mass of the waste residue, the volume ratio of the waste residues to the solvent is 1:1, wash and wet-mill the filter residues for 75 minutes, and the average particle size is 0.9 µm after ball milling;
(II) Mix the ball-milled calcium fluoride and magnesium fluoride with lye, adjust the pH to 10.5, raise the temperature to 55 degrees C, and add 811 nickel-cobalt-manganese material solution, 6 mol/L sodium hydroxide solution and 8 mol/L ammonia solution; the molar weight of sodium hydroxide in the sodium hydroxide solution and the molar weight of ammonia water in the ammonia solution are the same as the total molar weight of nickel, cobalt and manganese in the nickel-cobalt manganese material, the molar weight of calcium and magnesium in the fluoride salt is 0.5% of the total molar weight of nickel, cobalt and manganese in the nickel-cobalt manganese material, and the total molar concentration of nickel, cobalt and manganese in the nickel-cobalt-manganese material is 2 mol/L; after reaction for 65 hours, filter, wash and dry in turn to obtain the doped ternary precursor with an average particle size of 9.8 µm;
(III) Mix the dried doped ternary precursor with the lithium source for 10 minutes, the molar ratio of the lithium source to the doped ternary precursor is 1.05, and calcinate and coat aluminum oxide in turn; for the polycrystalline cathode material, the calcination temperature is 750 degrees C, the calcination time is 15 hours, the coating temperature is 500 degrees C, the coating time is 8 hours, and the coating amount of aluminum oxide is 0.3%.

### Embodiment 2

The embodiment provides a preparation method for preparing a cathode material using a doped ternary precursor, including the following steps:
(I) Pickle and filter the waste residues containing calcium fluoride and magnesium fluoride to obtain filter residues; the pickling process is performed for 0.5 hour at the stirring speed of 300 rpm and the heating temperature of 50 degrees C, use nitric acid solution for pickling, the mass of nitric acid is 0.5% of the mass of the waste residue, the volume ratio of the waste residues to the solvent is 1:2, wash and wet-mill the filter residues for 30 minutes, and the average particle size is 1.1 µm after ball milling;
(II) Mix the ball-milled calcium fluoride and magnesium fluoride with lye, adjust the pH to 11, raise the temperature to 52 degrees C, and add 831106 nickel-cobalt-manganese material solution, 6 mol/L sodium hydroxide solution and 8 mol/L ammonia solution; the molar weight of sodium hydroxide in the sodium hydroxide solution and the molar weight of ammonia water in the ammonia solution are the same as the total molar weight of nickel, cobalt and manganese in the nickel-cobalt manganese material, the molar weight of calcium and magnesium in the fluoride salt is 0.4% of the total molar weight of nickel, cobalt and manganese in the nickel-cobalt manganese material, and the total molar concentration of nickel, cobalt and manganese in the nickel-cobalt-manganese material is 2 mol/L; after reaction for 72 hours, filter, wash and dry in turn to obtain the doped ternary precursor with an average particle size of 9.5 µm;
(III) Mix the dried doped ternary precursor with the lithium source for 10 minutes, the molar ratio of the lithium source to the doped ternary precursor is 1.04, and calcinate and coat aluminum oxide in turn; for the polycrystalline cathode material, the calcination temperature is 730 degrees C, the calcination time is 12 hours, the coating temperature is 500 degrees C, the coating time is 8 hours, and the coating amount of aluminum oxide is 0.3%.

### Embodiment 3

The embodiment provides a preparation method for preparing a cathode material using a doped ternary precursor, including the following steps:
(I) Pickle and filter the waste residues containing calcium fluoride and magnesium fluoride to obtain filter residues; the pickling process is performed for 1.5 hours at the stirring speed of 250 rpm and the heating temperature of 48 degrees C, use hydrochloric acid solution for pickling, the mass of hydrochloric acid is 0.3% of the mass of the waste residue, the volume ratio of the waste residues to the solvent is 1:1.5, wash and wet-mill the filter residues for 120 minutes, and the average particle size is 0.5 µm after ball milling;
(II) Mix the ball-milled calcium fluoride and magnesium fluoride with lye, adjust the pH to 11.7, raise the temperature to 58 degrees C, and add 831106 nickel-cobalt-manganese material solution, 6 mol/L sodium hydroxide solution and 8 mol/L ammonia solution; the molar weight of sodium hydroxide in the sodium hydroxide solution and the molar weight of ammonia water in the ammonia solution are the same as the total molar weight of nickel, cobalt and manganese in the nickel-cobalt manganese material, the molar weight of calcium and magnesium in the fluoride salt is 0.3% of the total molar weight of nickel, cobalt and manganese in the nickel-cobalt manganese material, and the total molar concentration of nickel, cobalt and manganese in the nickel-cobalt-manganese material is 2 mol/L; after reaction for 50 hours, filter, wash and dry in turn to obtain the doped ternary precursor with an average particle size of 4 µm;
(III) Mix the dried doped ternary precursor with the lithium source for 10 minutes, the molar ratio of the lithium source to the doped ternary precursor is 1.08, and calcinate and coat aluminum oxide in turn; for the single crystal cathode material, the calcination temperature is 880 degrees C, the calcination time is 15 hours, the coating temperature is 600 degrees C, the coating time is 8 hours, and the coating amount of aluminum oxide is 0.25%.

### Embodiment 4

The embodiment provides a preparation method for preparing a cathode material using a doped ternary precursor. The difference is that in step (II), the molar weight of calcium and magnesium in the fluoride salt is 0.05% of the total molar weight of nickel, cobalt and manganese in the nickel-cobalt-manganese material, and the other operating steps and parameters are exactly the same as in Embodiment 1.

### Embodiment 5

The embodiment provides a preparation method for preparing a cathode material using a doped ternary precursor. The difference is that in step (II), the molar weight of calcium and magnesium in the fluoride salt is 1.2% of the total molar weight of nickel, cobalt and manganese in the nickel-cobalt-manganese material, and the other operating steps and parameters are exactly the same as in Embodiment 1.

### Embodiment 6

The embodiment provides a preparation method for preparing a cathode material using a doped ternary precursor. The difference is that in step (II), the molar weight of calcium and magnesium in the fluoride salt is 0.1% of the total molar weight of nickel, cobalt and manganese in the nickel-cobalt-manganese material, and the other operating steps and parameters are exactly the same as in Embodiment 1.

### Embodiment 7

The embodiment provides a preparation method for preparing a cathode material using a doped ternary precursor. The difference is that in step (II), the molar weight of calcium and magnesium in the fluoride salt is 0.7% of the total molar weight of nickel, cobalt and manganese in the nickel-cobalt-manganese material, and the other operating steps and parameters are exactly the same as in Embodiment 1.

### Embodiment 8

The embodiment provides a preparation method for preparing a cathode material using a doped ternary precursor. The difference is that in step (II), the molar weight of calcium and magnesium in the fluoride salt is 1% of the total molar weight of nickel, cobalt and manganese in the nickel-cobalt-manganese material, and the other operating steps and parameters are exactly the same as in Embodiment 1.

### Comparative Example 1

The embodiment provides a preparation method for preparing a cathode material using a doped ternary precursor. The difference is that the nickel-cobalt-manganese material is not doped with calcium, magnesium and fluorine.

The prepared cathode material is assembled into a button cell, and the assembly method of the button cell includes the following steps: use EC/DMC electrolyte with content of lithium hexafluorophosphate of 1.0 mol/L, mix the cathode material with SP (carbon black conductive agent), CNT (carbon nano tube) and PVDF (polyvinylidene fluoride), in which the mass ratio of cathode material, SP, CNT and PVDF is 90:4.5:0.5:5, use NMP (N-methylpyrrolidone) as solvent for slurrying, and stir for 6 hours to obtain the button cell.

For the button cell prepared above, the charge and discharge test was carried out at 4.3V by using a LANHE tester. The test results are shown in Table 1.

**Table 1**

| | 0.1C gram capacity (mAh) | Capacity retention ratio after cycled for 50 weeks at 25 degrees C (%) |
|---|---|---|
| Embodiment 1 | 212 | 99.7 |
| Embodiment 2 | 215 | 99.5 |
| Embodiment 3 | 205 | 99.9 |
| Embodiment 4 | 212.5 | 96.7 |
| Embodiment 5 | 207.5 | 99.8 |
| Embodiment 6 | 212 | 99.2 |
| Embodiment 7 | 210.2 | 99.8 |
| Embodiment 8 | 210.5 | 99.7 |
| Comparative Example 1 | 212 | 96.5 |

The above table shows that:
(1) Compared with Embodiments 4 and 5, Embodiment 1 has the capacity retention rate higher than that of Embodiment 4 and the gram capacity better than that of Embodiment 5, indicating that the disclosure has the advantages of high capacity and high cycling stability by controlling the molar weight of calcium and magnesium in the fluoride salt to 0.1-1% of the total molar weight of nickel, cobalt and manganese in the nickel-cobalt-manganese material; if the addition amount is less than 0.1%, the cycling performance will be poor; if the addition amount is higher than 1%, the capacity will be small.
(2) Compared with Comparative Example 1, Embodiment 1 has the capacity retention rate higher than Comparative Example 1, indicating that the fluoride salt is introduced as a seed crystal in the precursor stage and reacts with the nickel-cobalt-manganese material to obtain the ternary precursor doped with metal elements and fluorine, raw materials are simple and easily obtained, and taking the metal cations calcium and/or magnesium of fluoride salt as an example, the disclosure has the following advantages: (1) By adopting the method, calcium ions, magnesium ions and fluorine ions are not required to be introduced by coprecipitation in the doping process of calcium, magnesium and fluorine; sulfate is mostly used in the coprecipitation method, and the sulfate radical easily remains in the mother liquor and is finally introduced into the final material, so that the sulfur content of the final material is high, which has a great influence on the high-nickel small particle cathode material sintered at low temperature; the method provided by an embodiment of the disclosure can ensure the purity of the mother liquor system, and avoid the corrosion of equipment and pipelines in the coprecipitation process; (2) Compared with the conventional mixed doping in the sintering stage, nano-powder raw materials containing doping elements is not required to be introduced for the cathode material prepared by the doped ternary precursor provided in an embodiment of the disclosure, simplifying the mixing process, and having the characteristics of simple preparation process, small equipment corrosion, easy availability of raw materials and easy industrialization.

## Claims

1. A preparation method for a doped ternary precursor, including:
Mix fluoride salt with lye to adjust pH, and add nickel-cobalt-manganese material to prepare the doped ternary precursor after reaction, the molar weight of metal elements in the fluoride salt is 0.1-1% of the total molar weight of nickel, cobalt and manganese in the nickel-cobalt manganese material.

2. The preparation method according to claim 1, wherein the fluoride salt comprises calcium fluoride and/or magnesium fluoride, and the nickel-cobalt-manganese material comprises a nickel source, a cobalt source and a manganese source.

3. The preparation method according to claim 1 or 2, wherein the fluoride salt is obtained by treating waste residues containing the fluoride salt, and the treatment method includes: pickle and filter the waste residues containing the fluoride salt to obtain filter residues, and wet grind the filter residues after washing.

4. The preparation method according to any of claims 1-3, wherein the pH is 10 to 12.

5. The preparation method according to any of claims 1-4, wherein sodium hydroxide solution and ammonia solution are also added in the reaction;
The molar weight of sodium hydroxide in the sodium hydroxide solution is the same as the total molar weight of nickel, cobalt and manganese in the nickel-cobalt-manganese material;
The molar weight of ammonia in the ammonia solution is the same as the total weight of nickel, cobalt and manganese in the nickel-cobalt-manganese material.

6. The preparation method according to any of claims 1-5, wherein the reaction temperature is 50 to 60 degrees C, and the reaction time is 30 to100 hours.

7. A doped ternary precursor, which is prepared by the preparation method for the doped ternary precursor in any of claims 1-6, doping elements of the doped ternary precursor comprise fluorine ions and metal cations, the metal cations are the same as the metal cations in the fluoride salt, and the average particle size of the doped ternary precursor is 3 to 11 µm.

8. A cathode material, which is prepared by the doped ternary precursor in claim 7, and comprises a ternary positive active substance and an aluminum oxide layer coated on the surface of the ternary positive active substance.

9. A battery, which comprises a positive electrode, a negative electrode and a diaphragm, and the positive electrode is made of the cathode material in claim 8.
